# EUROPEAN PATENT SPECIFICATION

(11) **EP 2 146 506 B1**
(45) Date of publication and mention of the grant of the patent: **28.12.2011**
(21) Application number: 08160445.6
(22) Date of filing: 15.07.2008
(51) Int. Cl.: H04N 7/167

(54) **System and method of enabling decryption of encrypted services**
System und Verfahren von Entschlüsselungs- und Verschlüsselungsdiensten
Système et procédé d'activation de décryptage de services cryptés

(43) Date of publication of application: 20.01.2010
(73) Proprietor: Irdeto B.V., 2132 HD Hoofddorp (NL)
(72) Inventor: Benjamin, Lian, 598001 Singapore (SG)
(74) Representative: Tucker, Nigel P.

(56) References cited:
- WO-A-01/80460
- "FUNCTIONAL MODEL OF A CONDITIONAL ACCESS SYSTEM", EBU REVIEW- TECHNICAL, EUROPEAN BROADCASTING UNION. BRUSSELS, BE, no. 266, 21 December 1995 (1995-12-21), pages 64-77, XP000559450, ISSN: 0251-0936

## Description

Conditional access systems are well known and widely used in conjunction with currently available pay television systems. At present, such systems are based on the transmission of services encrypted with control words that are received by subscribers having a set-top box and a smart card that is used to store entitlements to view the services in one or more packages. The broadcast stream further contains entitlement management messages and entitlement control messages, which are necessary for the smart card to decrypt the broadcast services. The control word (or service encryption key) is the primary security mechanism for protecting the service data and is changed relatively frequently. Entitlement control messages are used to carry the control word in encrypted form, and are therefore also sent frequently. In contrast, entitlement management messages (EMM's), also referred to as key management messages (KMMs), are used to convey the secret keys used to decrypt the ECMs to extract the control word, and to decrypt other data related to the addition or removal of viewing/usage rights, and other user-specific data. As such there are different kinds of EMMs, which are sent with varying degrees of frequency, but invariably somewhat slower or much slower than the frequency at which ECMs are sent.

More recently, providing wireless services such as television on mobile telephones and other kinds of portable user terminals has emerged and is expected to become widespread technology in the near future. Such services may also contain premium content that is desired to be protected by a conditional access system.

Multiple parties have entered or desire to enter the conditional access market, in particular the market for wireless services, possibly in combination with providing the service itself. As an example, a first party may exploit both a service delivery system and a proprietary conditional access system, whereas a second party may choose to use the service delivery system of the first party while operating its own proprietary conditional access system.

A problem in such a complicated environment is that both proprietary conditional access systems may technically not be able to cooperate. On the other hand, none of the parties will probably be willing to fully rely on the conditional access system of the other party.

It is an object of the invention to provide a method of enabling decryption of encrypted services that reduces or eliminates this problem.

To that end, a method of enabling decryption as defined in claim 1 is proposed.

WO0180460 (D1) discloses a method for controlling the reception of a digital transmission and for receiving the additional information relating to a digital transmission into the terminal device (MS), in which method the provider of the digital transmission (TV) sends digital information to the receiving equipment and which digital information is displayed on the receiving equipment (STB) or on some other device attached to it. The decoding key entitling the decoding of the digital transmission is transmitted to the terminal device (MS) and transferred to the receiving equipment (STB), the digital transmission received is decoded with the decoding key.

Furthermore, a system configured for enabling decryption of an encrypted service by a user terminal of a subscriber as defined in claim 8 is proposed.

Still further, a method of enabling decryption of an encrypted service in a user terminal of a subscriber as defined in claim 12 is proposed.

Moreover, a user terminal is proposed as defined in claim 19.

Moreover, a computer program and a computer readable medium carrying such a computer program are proposed. The computer program comprises code portions, enabling a device running these portions, to perform the method as defined in one or more of the appended claims.

By forwarding the first entitlement management message of the first conditional access system to the user terminal via the second conditional access system while the second message contains the first entitlement management message, both the first and second conditional access system may use their own proprietary systems and messages. The user terminal may then be configured such that it would only enable decryption of encrypted service data upon successfully processing both the second message and the first entitlement management message. Consequently, the operators of the first and second conditional access systems both remain in control of the access for a subscriber to the encrypted service. In other words, a dual control conditional access management system may be established, wherein a first operator provides services and generates the first entitlement management message to actually control the access to the services, while a second operator has a subscriber base that the first operator desires to serve. Dual management allows the first operator and second operator to be in control.

It is noted that the first entitlement management message particularly relates to a change in the entitlements of the subscriber for decrypting particular encrypted service data. A particular embodiment is defined in claim 7. The operator of the second conditional access system may e.g. receive a request from the subscriber for changing his entitlements. The operator of the first conditional access system is subsequently informed and generates the first entitlement message. The second conditional access system incorporates the first entitlement management message in a second message and transmits both messages to the user terminal in accordance with the desired change.

It is also noted that messages equivalent to entitlement management messages (EMM's) may be used. An example of such equivalent messages includes key management messages (KMMs).

The first entitlement management message and second message may have different formats or be compliant with different protocols. As an example, the first entitlement management message may be a DVB-compliant message, whereas the second message may be an OMA BCAST Smartcard Profile message or a China Mobile MBBMS message. By having the first entitlement management message contained in the second message, the different formats/protocols may be maintained, while still allowing the user terminal, comprising corresponding security clients, to process both messages.

It should be appreciated that the first identifier may comprise an address of the first security client and the second identifier may comprise an address of the second security client.

It should be appreciated that the first and second security clients may be applications (applets) running on a user terminal, e.g. on a card inserted in the user terminal (e.g. a subscriber identity module (SIM)). However, the security clients may also be separate modules (e.g. cards) in communicative connection and configured for processing the first and second entitlement management messages.

It should be appreciated that the encapsulation of the first entitlement management message in the second message defines that the second message is used as a container message for carrying one or more first entitlement management messages to the user terminal.

The embodiments of claims 2, 9 and 13 allow the service delivery system and the conditional access systems to use separate networks. In a particular example, the service delivery system may use a (wireless) content broadcast network (e.g. a DVB-T network; a DVB-H network; a CMMB network), wherein the service data are encrypted using control words carried by entitlement control messages multiplexed with the encrypted service data and transmitted as IP packets over the content broadcast network. The second network may e.g. be a telecommunications network (e.g. a GPRS network; a WCDMA network; a LTE network (4G)), operated by the operator of the second conditional access system and used for transmitting the second message, encapsulating the first entitlement management message, to the user terminal.

As mentioned above, the entitlement management messages typically relate to a change in the entitlements of the subscriber for the decryption of particular service data. However, other types of entitlement management messages may be distinguished, such as refresh entitlement messages. Since entitlements frequently have an expiry date, the entitlements should be refreshed also in the absence of any change in the entitlements itself. The embodiments of claims 3 and 14 facilitate the provision of such refresh entitlement management messages over the first network. However, it should be noted that such entitlement management messages, although less efficient, may also be provided over the second network.

The first and second security client may be uniquely identified and paired such that only these particular clients will be able to communicate as defined in the embodiment of claim 15. Such pairing may be established during initialisation of the security devices, e.g. during personalisation of the SIM card prior to delivery to the operator or terminal vendors or points of sale to prospective users. The pairing provides the dual control of the decryption of the encrypted service data by both the operator of the first conditional access system and the second conditional access system. Only as long as the first and second secure client are paired, the second message and first entitlement management message may both be processed successfully.

The first and second security client communicate via a secure channel as defined in claim 16. The first and second security client will not communicate with counterparts that do not have proper security credentials.

The embodiments of claims 4 and 17 enable each of the operators of the conditional access systems to break the pairing of the security clients by providing specific messages for such a purpose to their respective security clients, thereby effectuating control over the decryption of the encrypted service by the user terminal. Once such a message is received, the first security client stops receiving and/or processing the first entitlement management messages sent over either the first or the second networks, thereby disabling the user terminal to decrypt encrypted service data. The first security client may, however, continue to be able to receive and process any message received via the first network that instructs the first security client to restore the pairing with the second security client with which it was previously paired. It will then attempt to communicate with the second security client using the same security credentials as before the pairing was broken. The second security client, upon receiving a second message to break the pairing with the first security client, will do so and not respond to any further second messages except those that instruct it to re-establish the pairing with the first security client. It will then attempt to communicate with the first security client using the same security credentials as before the pairing was broken.

The embodiments of claims 5 and 18 enable initiation and/or the above-mentioned restoration of the pairing of the first and second security clients by receiving messages for that purpose from both the first and second conditional access systems.

It should be appreciated that the second message may also be a second entitlement management message as defined in claims 6 and 10. Apart from containing the first entitlement management message as described previously, the second message may carry entitlements for the subscriber of the user terminal for decrypting encrypted services, e.g. provided by the operator of the second conditional access system himself. However, if the pairing with the first security client is broken, then the second security client may cease processing all second messages except those which instruct it to re-establish the pairing.

Hereinafter, an embodiment of the invention will be described in further detail. It should be appreciated, however, that this embodiment may not be construed as limiting the scope of protection for the present invention.

In the drawings:
FIG. 1 is a schematic illustration of a wireless broadcast network and a telecommunications network providing encrypted services and entitlement management messages to a user terminal; and
FIG. 2 is more detailed illustration of the system of FIG. 1 according to an embodiment of the invention.

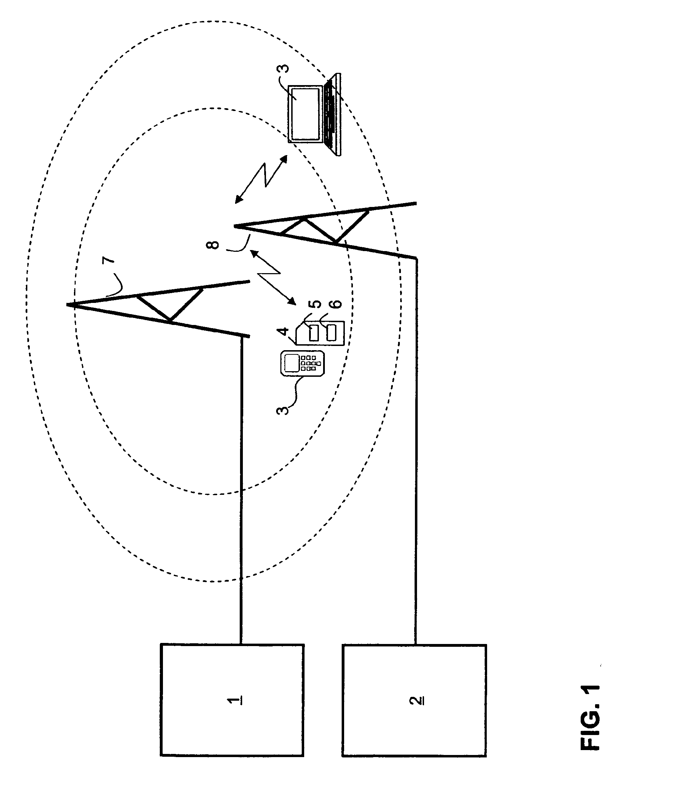

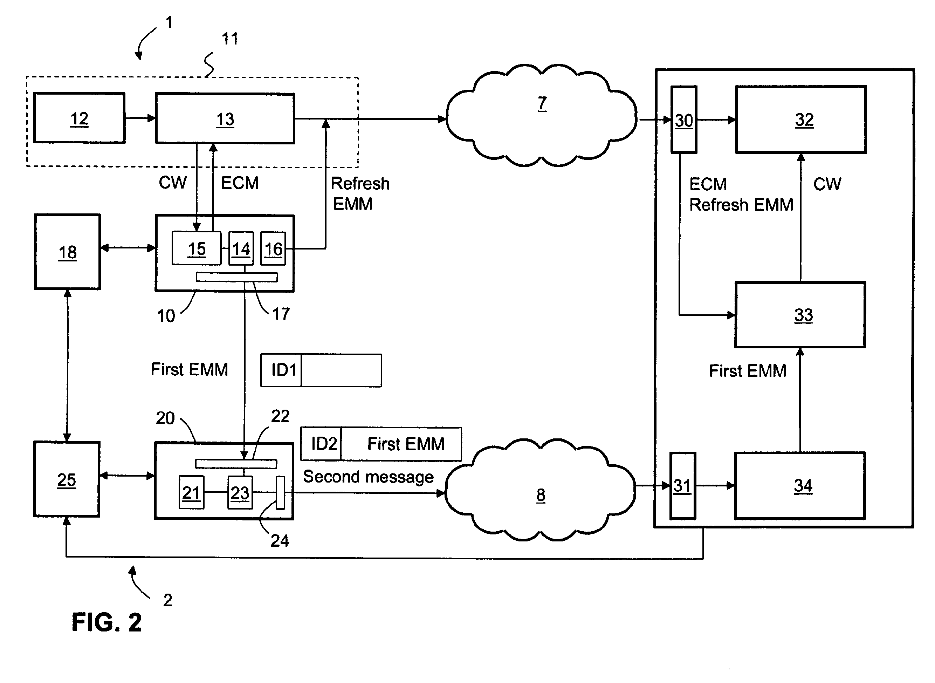

FIG. 1 shows a schematic illustration of a first operator system 1 and a second operator system 2 providing services to mobile user terminals 3. Examples of mobile user terminals include mobile phones, mobile computing devices etc. It should be appreciated that while the present embodiment relates exclusively to wireless provision of services, the invention is also applicable for the provision of services via terminals having a wired connection. Mobile terminals 3 may comprise identity modules, relating the device to a particular subscriber. As an example, for a mobile phone, the identity module may be a subscriber identity module (SIM) card 4. SIM card 4 may, apart from commonly known features, comprise two dedicated applets 5, 6 that will be described in further detail with reference to FIG. 2.

First operator system 1 provides encrypted services to mobile user terminals 3 via a wireless broadcast network 7 (first network). Wireless broadcast network 4 may e.g. be a DVB-H network. A broadcasting standard used for mobile television is known as DVB-H and is defined in EN 302 304, incorporated in the present application by reference in its entirety. The wireless broadcast network 7 may also be a related network, such as a CMMB-network specified by SARFT in China.

Second operator system 2 provides telecommunications services to the mobile user terminals 3 via a telecommunications network 8 (second network). Such telecommunications network 8 may include a GPRS network, a WCDMA network or an LTE network (4G) as generally known to the person skilled in the art. The second network may also be a (wireless) broadcast network.

The first operator system and second operator system may be included in a single head-end system.

First operator system 1 may e.g. be configured for providing both content services and conditional access (CA) services. The operator of the second operator system 2 may desire to provide content services to his subscribers, thereby using (some or all of) the content services of the first operator system 1. The operators of the first operator system 1 and second operator system 2 may decide to cooperate in providing encrypted services to the user terminals 3. However, both operators would like to control access to the content services. The embodiment of the invention as described with reference to FIG. 2 provides a solution.

In FIG. 2, first operator system 1 includes a first conditional access (CA) system 10 and a service delivery system 11. While in the present embodiment the first CA system 10 and service delivery system 11 and are part of the first operator system 1, it should be noted that the first CA system 10 and service delivery system 11 and may be operated by different operators.

Service delivery system 11 includes an encoder 12 to encode services (e.g. video services) in the appropriate format. Encoder 12 may e.g. comprise a H.264/AVC codec to provide MPEG2 transport streams. It should be appreciated however, that any kind of service data (not only video) may be provided. Service delivery system 11 also comprises an encryptor 13 configured for encrypting the service data received from the encoder 12 and to output encrypted service data in a manner known to the person skilled in the art.

First CA system 10 comprises a first generator 14 configured for generating first entitlement management messages (first EMM's). The first EMM's comprise entitlement(s) for the subscriber of the user terminal 3 for decrypting the encrypted services as received from the service delivery system 11 over the wireless broadcast network 7. The first EMM's are provided by and associated with the first CA system 10 as defined by first identifier ID1.

Furthermore, the first CA system 10 comprises a generator 15 configured for generating entitlement control messages (ECMs) and a generator 16 for providing further EMM's (refreshment EMM's), the operation of which will be described in further detail below. First CA system 10 also comprises a first transmitter 17 configured for transmitting the first EMM's to the second operator system 2. First CA system 10 is under the control of a subscriber management system 18 configured for performing back office services for the first CA system 10.

Second operator system 2 comprises a second CA system 20. Second CA system 20 is a CA system different from the first CA system 10. As an example, first and second CA system 10, 20 may be different proprietary CA systems. First CA system 10 and second CA system 20 may also originate from the same CA vendor but be under control of different parties.

Second operator system 2 contains a second generator 21 configured for generating second messages. The second messages comprise an identifier ID2 of the second CA system.

The second CA system 20 further comprises a receiver 22 arranged for receiving the first EMM's from the first CA system 10, an encapsulator 23 configured for containing the first EMM as received from the first CA system 10 via the receiver 22 in the second message as generated by second generator 21, and a second transmitter 24 configured for transmitting the second message containing the first EMM over the second network 8 to the mobile user terminal 3. The second CA system 20 is under the control of a second subscriber management system 25 configured for performing back office services for the second CA system 20.

Mobile user terminal 3 comprises a first receiver 30 and a second receiver 31 configured for receiving encrypted content services over the first network 7 and for receiving the second message containing the first EMM over the second network 8, respectively. The encrypted content service-is decrypted using a decryptor 32. The mobile user terminal 3 comprises a first secure client 33 and a second secure client 34 controlling the decryption of the encrypted content service using the first entitlement management message and the second message as received over the second network 8. In case mobile user terminal 3 comprises a mobile telephone, secure clients 33, 34 may be implemented as applets 5, 6 on a SIM card 4 (see FIG. 1). Applets 5 and 6 are typically installed on the SIM card when the SIM card is personalised by the SIM card vendor prior to delivery of the SIM card to the operator of the mobile telephony network. Personalisation is done in a highly-secure personalisation centre, usually owned and operated by the SIM card vendor. It is also at this time that the applets are paired.

It should be appreciated, however, that secure clients 33, 34 may, however, be implemented otherwise, e.g. as separate cards or modules in communicative connection with the user terminal 3. One or both secure clients may also be stored in fixed memory of the user terminal 3.

The first secure client 33 and second secure client 34 have unique identifiers ID1, ID2 in order to associate them with the first and second CA systems 10, 20 and are paired such that they will only communicate with each other and not with other similar clients. Pairing may be performed during personalisation. The secure clients 33, 34 communicate via a secure channel.

A method of operating the system of FIG. 2 will now be described in further detail.

The subscriber using user terminal 3 may have subscribed to a particular set of encrypted services from service delivery system 10.

Encoder 12 outputs a plurality of service data that are subsequently encrypted in encryptor 13 using encryption keys. The encryption keys are provided as control words (CW's) to ECM generator 15 and information reflecting the applicable CW is provided back as ECM's in order to multiplex the ECM's in the encrypted service data to be transmitted over the network 7. Each ECM includes at least one set of key information enabling an authorised subscriber to obtain the CW from the ECM in order to decrypt the encrypted service data in a manner known as such. In brief, the encrypted ECM is extracted from the encrypted service data stream and submitted to the first secure client 33. If it is determined that the subscriber is authorized to encrypt the service data, first secure client 33 will extract the CW from the ECM by decrypting the ECM and provide the CW to the decryptor 32 for decrypting the encrypted service data.

It should be appreciated that other systems may be used, e.g. a system wherein secret encryption algorithms known only by the security devices and the CA systems are used.

The authorisation to decrypt the ECM's and to obtain CW's from the ECM's in order to decrypt the encrypted service data from the service delivery system 11 is dictated by the entitlement(s) of the subscriber of the user terminal 3. Such an entitlement(s) is represented by one or more product or service identifiers that are stored in the secure device in user terminal 3, along with information that indicates whether the user currently has the right to consume the services associated with these product or service identifiers EMMs are used to convey these product or service identifiers to the secure device in user terminal 3. If the user tunes to a service for which he has current consumption rights, the user terminal 3 is allowed to decrypt the ECM's in the encrypted service data stream in order to subsequently obtain the CW for decrypting the encrypted service data.

The product or service identifiers representing the entitlement(s) of the subscriber of the user terminal 3 for decrypting services are typically associated with an expiry date. The entitlements, therefore, need to be refreshed regularly, which is done by transmitting refresh EMM's, generated by the generator 16 in the first CA system 10, and transmitted to user terminal 3 over the first network 7 (or via the second CA system 2 and the second network 8).

The first EMM described above will typically involve a change in the entitlement(s) to decrypt services of a subscriber of the user terminal 3.

In a first situation, the subscriber of user terminal 3 may be a subscriber of the operator of the second CA system 2. When this subscriber desires to receive encrypted services from service delivery system 11, he first needs to have the required entitlements in place.

In a second situation, the subscriber may already be entitled to receive services from service delivery system 11 but decide to subscribe to additional and/or less services.

Such changes may be communicated by the subscriber of the user terminal 3 to the subscriber management system 25 of the second operator system 2, as illustrated in FIG. 2 (lowest communication path). The subscriber may communicate the change using the user terminal 3 and the second network 8. However, communication of the change to the subscriber management system 25 may also be performed otherwise.

Once the change has been communicated, the entitlement(s) of the user terminal 3 should be updated before the subscriber is enabled to decrypt the encrypted services as changed. Subscriber management system 25 of the second operator system 2 transmits a request to the subscriber management system 18 of the first operator system over a secure and authenticated TCP/IP connection. Subscriber management system 18 and subscriber management system 25 are assumed to be synchronized in terms of the unique identification of packages and services offered by the first operator, and in terms of the unique IDs of the secure client 33. When a user who is a customer of the second operator needs to have his entitlements changed, subscriber management system 25 communicates the request to subscriber management system 18, where the former provides the latter with at least the user's unique and possibly anonymous identifier, the unique identifiers of the packages or services in question, and the action to be performed in regards to the user's entitlements to those packages or services.

In response, the first EMM generator 14 generates the first EMM, containing ID1, and transmits the first EMM via the first transmitter 17 and receiver 22 to the second CA system 20. Also, second generator 21 generates a second message containing ID2.

Encapsulator 23 may be implemented such that the first EMM is contained in the second message as illustrated in FIG. 2. The combined message is then transmitted over the second network 8.

The combined message is received over the second network 8 using second receiver 31. By recognizing the second identifier ID2, second security client 34, associated to second CA system 20 by means of this identifier, will process the second message by extracting the first EMM from the second message. The first EMM will not be provided if the second message cannot be processed or processing is not successful. After extraction, the second security client 34 forwards the first EMM to the first security client 33 (as long as the first security client 33 and the second security client 34 are paired). Upon recognition of the first identifier ID1, associated to the first CA system 10 by means of this identifier, the first security client 33 will process the first EMM and effect the necessary changes to the entitlements stored in secure client 33. Valid entitlements for a particular service or package of services will enable the decryptor 33 to decrypt the desired encrypted service data received over the first network 7 from the delivery system 11. In particular, successful processing of the first EMM will enable the first security client 33 to decrypt the ECM's received over the first network 33 and to provide CW's for decrypting the encrypted service data. In other words, the first security client 33, associated with the first operator system 1 by means of ID1, allows or blocks access to the services according to the entitlements contained in the first EMM and subsequently stored in the said security client. The first EMM may subsequently be received over either the first network 7 or the second network 8.

The above method allows both the operator of the first CA system 10 and of the second CA system 20 to control whether or not the subscriber is authorized to decrypt the encrypted service data from the service delivery system 11 by requiring that both the first and second EMM should be used in the user terminal 3. Only when both the first EMM, associated with the first CA system 10, and the second message, associated with the second CA system 20, are processed successfully, the user terminal 3 (in particular, the decryptor 32) is enabled to decrypt the encrypted service data.

As mentioned above, the first and second security client 33, 34 are uniquely identified and paired such that only these clients will be able to communicate with each other. As a consequence, the operators of the first and second CA systems 10, 20 remain both in control of enabling decryption by the user terminal 3 of the subscriber.

Each of the operators of the CA systems 10, 20 may desire to break the pairing of the security clients 33, 34 by providing specific messages for such a purpose, thereby effectuating control over the decryption of the encrypted service by the user terminal 3. If the second operator sends such a message to break the pairing, the second security client 34 stops receiving and/or processing all second messages (except re-pair messages) received over the second network 8 regardless of whether they contain first entitlement messages or not, and transmits a request to security client 33 to break the pairing. If the first security client 33 receives a message from the second security client 34 to break the pairing, the first security client 33 stops receiving and/or processing the first EMM's received over the second network 8, and also stops extracting CWs from ECMs, thereby disabling the user terminal 3 to decrypt encrypted service data. If the first security client 33 receives a message from the first operator, via the first network 7 to break the pairing, the first security client stops receiving and/or processing the first EMM's received over the second network 8, and also stops extracting CWs from ECMs, thereby disabling the user terminal 3 to decrypt encrypted service data. The pairing may be restored if re-pair messages are received from both the first and second CA systems 10, 20.

## Claims

1. A method of enabling decryption of an encrypted service by a user terminal of a subscriber in a system comprising at least a first conditional access system, associated with a first security client in said user terminal by a first conditional access system operator identifier, and a second conditional access system, associated with a second security client paired with said first security client in said user terminal by a second conditional access system operator identifier, said first conditional access system being connected to said second conditional access system and at least said second conditional access system being connected to said user terminal, the method comprising the steps of:
- generating at least one first entitlement management message by said first conditional access system, said first entitlement management message being compliant with a first conditional access protocol, carrying said first conditional access system operator identifier and an entitlement for said subscriber of said user terminal for decrypting said encrypted service, said first conditional access system operator identifier of the first entitlement management message enabling the first security client to successfully process the first entitlement message upon recognition of the first conditional access system operator identifier;
- transmitting said first entitlement management message to said second conditional access system;
- generating at least one second message at said second conditional access system, said second message being compliant with a second conditional access protocol different from the first conditional access protocol, carrying said second conditional access system operator identifier of said second conditional access system, said second conditional access system operator identifier of the second message enabling the second security client to successfully process the second message upon recognition of the second conditional access system operator identifier;
- encapsulating said first entitlement management message by said second message;
- transmitting said second message containing the first entitlement management message from said second conditional access system to said user terminal for enabling decryption of said encrypted service.

2. The method according to claim 1, wherein a service delivery system is connected to said user terminal via a first network, said first conditional access system being configured for encrypting service data from said service delivery system and said second conditional access system is connected to said user terminal via a second network, the method further comprising the steps of:
- transmitting said encrypted service data of said encrypted service to said user terminal over said first network;
- transmitting said second message containing the first entitlement management message to said user terminal over said second network.

3. The method according to claim 2, further comprising the step of transmitting further entitlement management messages to said user terminal over said first network.

4. The method according to claim 2 or 3, wherein said first security client is configured for processing said first entitlement management message and said second security client is configured for processing said second message, said first security client and said second security client being paired, the method further comprising the step of transmitting a client pair breaking message from at least one of said first and second conditional access system over said first and second network, respectively, for disabling at least one of said first security client and second security client to process said first entitlement message and said second message respectively.

5. The method according to one or more of the claims 2-4, further comprising the steps of:
- transmitting a first pair message from said first conditional access system to said first security client over said first network; and
- transmitting a second pair message from said second conditional access system to said second security client over said second network.

6. The method according to one or more of the preceding claims, wherein said second message is an entitlement management message.

7. The method according to one or more of the preceding claims, wherein said first conditional access system comprises a first subscriber management system and said second conditional access system comprises a second subscriber management system, the method further comprising the step of receiving entitlement change messages from said second subscriber management system at said first subscriber management system.

8. A system configured for enabling decryption of an encrypted service by a user terminal of a subscriber comprising a first conditional access system, associated with a first security client in said user terminal by a first conditional access system operator identifier, and a second conditional access system, associated with a second security client paired with said first security client in said user terminal by a second conditional access system operator identifier, said first conditional access system and said second conditional access system being connectable to each other, said first conditional access system comprising:
- a first generator configured for generating at least one first entitlement management message, said first entitlement management message being compliant with a first conditional access protocol, carrying said first conditional access system operator identifier and an entitlement for said subscriber of said user terminal for decrypting said encrypted service, said first conditional access system operator identifier of the first entitlement management message enabling the first security client to successfully process the first entitlement message upon recognition of the first conditional access system operator identifier; and
- a first transmitter for transmitting said first entitlement management message to said second conditional access system; said second conditional access system comprising:
- a receiver configured for receiving said first entitlement management message from said first transmitter;
- a second generator configured for generating at least one second message being compliant with a second conditional access protocol different from the first conditional access protocol, said second message carrying said second conditional access system operator identifier, said second conditional access system operator identifier of the second message enabling the second security client to successfully process the second message upon recognition of the second conditional access system operator identifier;
- an encapsulator configured for encapsulating said first entitlement management message in said second message; and
- a second transmitter for transmitting said second message containing the first entitlement message to said user terminal for enabling decryption of said encrypted service.

9. The system according to claim 8, further comprising a service delivery system configured for delivering service data, wherein said first conditional access system is configured for encrypting said service data to provide said encrypted service over a first network to said user terminal and wherein said second transmitter is configured for transmitting said second message containing the first entitlement message over a second network to said user terminal.

10. The system according to claim 8 or 9, wherein said second generator is configured for generating said second message as an entitlement management message.

11. The system according to one or more of the claims 8-10, wherein at least one of the first conditional access system and the second conditional access system is configured for performing the step of claims 4 and 5.

12. A method of enabling decryption of an encrypted service in a user terminal of a subscriber, the method comprising the steps of:
- receiving service data, encrypted by a first conditional access system, of said encrypted service;
- receiving a second message being compliant with a second conditional access protocol, generated by a second conditional access system, carrying a second conditional access system operator identifier and having encapsulated a first entitlement message being compliant with a first conditional access protocol different from the second conditional access protocol, said first entitlement management message being generated by said first conditional access system, carrying a first conditional access system operator identifier of said first conditional access system and an entitlement for said subscriber of said user terminal for decrypting said encrypted service;
- processing successfully, upon recognition of the second conditional access system operator identifier, said second message by a second security client, identified by said second conditional access system operator identifier, to obtain said first entitlement message;
- processing successfully, upon recognition of the first conditional access system operator identifier, said first entitlement management message by a first securtity client paired with the second security client, identified by said first conditional access system operator identifier, to enable decryption of said encrypted service data.

13. The method of claim 12, further comprising the steps of:
- receiving said encrypted service data over a first network;
- receiving said second message containing the first entitlement management message over a second network.

14. The method according to claim 13, further comprising the step of receiving further entitlement messages over said first network.

15. The method according to one or more of the preceding claims 12-14, further comprising the step of uniquely pairing said first security client and said second security client.

16. The method according to one or more of the preceding claims 12-15, wherein said first security client and second security client communicate over a secure channel.

17. The method according to claim 15, further comprising the steps of:
- receiving a pair breaking message over at least one of said first network and said second network;
- breaking said unique pairing of said first security client and said second security client in response to said pair breaking message.

18. The method according to claim 15 comprising the steps of:
- receiving a pairing message over said first network and second network;
- pairing said first security client and said second security client in response to said pairing message.

19. A user terminal comprising:
- a first receiver configured for receiving service data, encrypted by a first conditional access system, of an encrypted service;
- a decryption module configured for decrypting said encrypted service data to obtain decrypted service data;
- a first security client associated with said first conditional access system by means of a first conditional access system operator identifier;
- a second security client associated with a second conditional access system by means of a second conditional access system operator identifier; and paired with the first security client
- a second receiver configured for receiving a second message being compliant with a second conditional access protocol, generated by said second conditional access system, carrying said second conditional access system operator identifier and containing a first entitlement management message being compliant with a first conditional access protocol different from the second conditional access protocol, generated by said first conditional access system, carrying said first conditional access system operator identifier and an entitlement for a subscriber of said user terminal for decrypting said encrypted service;
- said second security client, in response to recognizing said second conditional access system operator identifier from said second message, being configured for successfully processing second message to obtain said first entitlement management message;
- said first security client, in response to recognizing said first conditional access system operator identifier from said first entitlement management message, being configured for successfully processing said first entitlement management message for enabling said decryption module to decrypt said encrypted service data.

20. The user terminal according to claim 19, further being configured for performing the method of one or more of the claims 12-18.

## Patentansprüche

1. Verfahren zum Ermöglichen der Entschlüsselung eines verschlüsselten Dienstes durch ein Benutzerterminal eines Teilnehmers in einem System, das zumindest ein erstes konditionelles Zugriffssystem, das einem ersten Sicherheitsclient in dem Benutzerterminal durch einen Bedieneridentifizierer des ersten konditionellen Zugriffssystems zugeordnet ist, sowie ein zweites konditionelles Zugriffssystem, das einem mit dem ersten Sicherheitsclient gepaarten zweiten Sicherheitsclient in dem Benutzerterminal durch einen Bedieneridentifizierer des zweiten konditionellen Zugriffssystem zugeordnet ist, aufweist, wobei das erste konditionelle Zugriffssystem mit dem zweiten konditionellen Zugriffssystem verbunden ist und zumindest das zweite konditionelle Zugriffssystem mit dem Benutzerterminal verbunden ist, wobei das Verfahren die Schritte umfasst:
- Erzeugen von zumindest einer ersten Berechtigungs-Managementmeldung durch das erste konditionelle Zugriffssystem, wobei die erste Berechtigungs-Managementmeldung einem ersten konditionellen Zugriffsprotokoll entspricht, den Bedieneridentifizierer des ersten konditionellen Zugriffssystems und eine Berechtigung für den Teilnehmer des Benutzerterminals zum Entschlüsseln des verschlüsselten Dienstes tragend, wobei der Bedieneridentifizierer des ersten konditionellen Zugriffssystems der ersten Berechtigungs-Managementmeldung den ersten Sicherheitsclient in die Lage versetzt, bei Erkennung des Bedieneridentifizierers ersten konditionellen Zugriffssystems die erste Berechtigungsmeldung erfolgreich zu bearbeiten;
- Senden der ersten Berechtigungs-Managementmeldung zu dem zweiten konditionellen Zugriffssystem;
- Erzeugen von zumindest einer zweiten Meldung an dem zweiten konditionellen Zugriffssystem, wobei die zweite Meldung einem zweiten konditionellen Zugriffsprotokoll entspricht, das sich von dem ersten konditionellen Zugriffsprotokoll unterscheidet, den Bedieneridentifizierer des zweiten konditionellen Zugriffssystems des zweiten konditionellen Zugriffssystems tragend, wobei der Bedieneridentifizierer des zweiten konditionellen Zugriffssystems der zweiten Meldung den zweiten Sicherheitsclient in die Lage versetzt, bei Erkennung des Bedieneridentifizierers des zweiten konditionellen Zugriffssystems die zweite Meldung erfolgreich zu bearbeiten;
- Verkapseln der ersten Berechtigungs-Managementmeldung durch die zweite Meldung;
- Senden der die erste Berechtigungs-Managementmeldung enthaltenden zweiten Meldung von dem zweiten konditionellen Zugriffssystem zu dem Benutzerterminal, um die Entschlüsselung des verschlüsselten Dienstes zu ermöglichen.

2. Das Verfahren nach Anspruch 1, worin ein Dienstbelieferungssystem mit dem Benutzerterminal über ein erstes Netzwerk verbunden ist, wobei das erste konditionelle Zugriffssystem konfiguriert ist, um Dienstdaten von dem Dienstbelieferungssystem zu verschlüsseln, und das zweite konditionelle Zugriffssystem mit dem Benutzerterminal über ein zweites Netzwerk verbunden ist, wobei das Verfahren ferner die Schritte umfasst:
- Senden der verschlüsselten Dienstdaten des verschlüsselten Dienstes zu dem Benutzerterminal über das erste Netzwerk;
- Senden der die erste Berechtigungs-Managementmeldung enthaltenden zweiten Meldung zu dem Benutzerterminal über das zweite Netzwerk.

3. Das Verfahren nach Anspruch 2, das ferner den Schritt umfasst: Senden von weiteren Berechtigungs-Managementmeldungen zu dem Benutzerterminal über das erste Netzwerk.

4. Das Verfahren nach Anspruch 2 oder 3, worin der erste Sicherheitsclient konfiguriert ist, um die erste Berechtigungs-Managementmeldung zu bearbeiten, und der zweite Sicherheitsclient konfiguriert ist, um die zweite Meldung zu bearbeiten, wobei der erste Sicherheitsclient und der zweite Sicherheitsclient gepaart sind, wobei das Verfahren ferner die Schritte umfasst: Senden einer Clientpaar-Trennungsmeldung von zumindest einem des ersten und zweiten konditionellen Zugriffssystems jeweils über das erste und das zweite Netzwerk, um zumindest einen des ersten Sicherheitsclients und des zweiten Sicherheitsclients außer Lage zu versetzen, jeweils die erste Berechtigungsmeldung und die zweite Berechtigungsmeldung zu bearbeiten.

5. Das Verfahren nach einem oder mehreren der Ansprüche 2 - 4, das ferner die Schritte umfasst:
- Senden einer ersten Paarmeldung von dem ersten konditionellen Zugriffssystem zu dem ersten Sicherheitsclient über das erste Netzwerk; und
- Senden einer zweiten Paarmeldung von dem zweiten konditionellen Zugriffssystem zu dem zweiten Sicherheitsclient über das zweite Netzwerk.

6. Das Verfahren nach einem oder mehreren der vorhergehenden Ansprüche, worin die zweite Meldung eine Berechtigungs-Managementmeldung ist.

7. Das Verfahren nach einem oder mehreren der vorhergehenden Ansprüche, worin das erste konditionelle Zugriffssystem ein erstes Teilnehmermanagementsystem aufweist und das zweite konditionelle Zugriffssystem ein zweites Teilnehmermanagementsystem aufweist, wobei das Verfahren den Schritt umfasst: Empfangen von Berechtigungsänderungsmeldungen von dem zweiten Teilnehmermanagementsystem an dem ersten Teilnehmermanagementsystem.

8. System, das konfiguriert ist, um eine Entschlüsselung eines verschlüsselten Dienstes durch einen Benutzerterminal eines Teilnehmers zu ermöglichen, umfassend: ein erstes konditionelles Zugriffssystem, das einem ersten Sicherheitsclient in dem Benutzerterminal durch einen Bedieneridentifizierer des ersten konditionellen Zugriffssystems zugeordnet ist, und ein zweites konditionelles Zugriffssystem, das einem mit dem ersten Sicherheitsclient gepaarten zweiten Sicherheitsclient in dem Benutzerterminal durch einen Bedieneridentifizierer des zweiten konditionellen Sicherheitssystems zugeordnet ist, wobei das erste konditionelle Zugriffssystem und das zweite konditionelle Zugriffssystem miteinander verbindbar sind, wobei das erste konditionelle Zugriffssystem umfasst:
- einen ersten Generator, der konfiguriert ist, um zumindest eine erste Berechtigungs-Managementmeldung zu erzeugen, wobei die erste Berechtigungs-Managementmeldung einem ersten konditionellen Zugriffsprotokoll entspricht, den Bedieneridentifizierer des ersten konditionellen Zugriffssystems und eine Berechtigung für den Teilnehmer des Benutzerterminals zum Entschlüsseln des verschlüsselten Dienstes tragend, wobei der Bedieneridentifizierer des ersten konditionellen Zugriffssystems der ersten Berechtigungs-Managementmeldung den ersten Sicherheitsclient in die Lage versetzt, bei Erkennung des Bedieneridentifizierers des ersten konditionellen Zugriffssystems die erste Berechtigungsmeldung erfolgreich zu bearbeiten; und
- einen ersten Sender zum Senden der ersten Berechtigungs-Managementmeldung zu dem zweiten konditionellen Zugriffssystem; wobei das zweite konditionelle Zugriffssystem umfasst:
- einen Empfänger, der konfiguriert ist, um die erste Berechtigungs-Managementmeldung von dem ersten Sender zu empfangen;
- einen zweiten Generator, der konfiguriert ist, um zumindest eine zweite Meldung zu erzeugen, die einem zweiten konditionellen Zugriffsprotokoll entspricht, das sich von dem ersten konditionellen Zugriffsprotokoll unterscheidet, wobei die zweite Meldung den Bedieneridentifizierer des zweiten konditionellen Zugriffssystems trägt, wobei der Bedieneridentifizierer des zweiten konditionellen Zugriffssystems der zweiten Meldung den zweiten Sicherheitsclient in die Lage versetzt, bei Erkennung des Bedieneridentifizierers des zweiten konditionellen Zugriffssystems die zweite Meldung erfolgreich zu bearbeiten;
- einen Verkapsler, der konfiguriert ist, um die erste Berechtigungs-Managementmeldung in der zweiten Meldung zu verkapseln; und
- einen zweiten Sender zum Senden der die erste Berechtigungsmeldung enthaltenden zweiten Meldung zu dem Benutzerterminal, um die Entschlüsselung des verschlüsselten Dienstes zu ermöglichen.

9. Das System nach Anspruch 8, das ferner ein Dienstbelieferungssystem aufweist, das konfiguriert ist, um Dienstdaten zu liefern, wobei das erste konditionelle Zugriffssystem konfiguriert ist, um die Dienstdaten zu verschlüsseln, um den verschlüsselten Dienst über ein erstes Netzwerk zu dem Benutzerterminal zu liefern, und worin der zweite Sender konfiguriert ist, um die die erste Berechtigungsmeldung enthaltende zweite Meldung über ein zweites Netzwerk zu dem Benutzerterminal zu senden.

10. Das System nach Anspruch 8 oder 9, worin der zweite Generator konfiguriert ist, um die zweite Meldung als Berechtigungs-Managementmeldung zu erzeugen.

11. Das System nach einem oder mehreren der Ansprüche 8 - 10, worin zumindest eines des ersten konditionellen Zugriffssystems und des zweiten konditionellen Zugriffssystems konfiguriert ist, um den Schritt der Ansprüche 4 und 5 durchzuführen.

12. Verfahren zum Ermöglichten einer Entschlüsselung eines verschlüsselten Dienstes in einem Benutzerterminal eines Teilnehmers, wobei das Verfahren die Schritte umfasst:
- Empfangen von Dienstdaten des verschlüsselten Dienstes, welche durch ein erstes konditionelles Zugriffssystem verschlüsselt sind;
- Empfangen einer zweiten Meldung, die einem zweiten konditionellen Zugriffsprotokoll entspricht, erzeugt von einem zweiten konditionellen Zugriffssystem, einen Bedieneridentifizierer eines zweiten konditionellen Zugriffssystems trägt und eine erste Berechtigungsmeldung verkapselt hat, die einem ersten konditionellen Zugriffsprotokoll entspricht, das sich von dem zweiten konditionellen Zugriffsprotokoll unterscheidet, wobei die erste Berechtigungs-Managementmeldung von dem ersten konditionellen Zugriffssystem erzeugt wird, einen Bedieneridentifizierer des ersten konditionellen Zugriffssystems des ersten konditionellen Zugriffssystems sowie eine Berechtigung für den Teilnehmer des Benutzerterminals zum Entschlüsseln des verschlüsselten Dienstes tragend;
- bei Erkennung des Bedieneridentifizierers des zweiten konditionellen Zugriffssystems, erfolgreiches Bearbeiten der zweiten Meldung durch einen zweiten Sicherheitsclient, der von dem Bedieneridentifizierer des zweiten konditionellen Zugriffssystems identifiziert ist, um die erste Berechtigungsmeldung zu erhalten;
- bei Erkennung des Bedieneridentifizierers des ersten konditionellen Zugriffssystems, erfolgreiches Bearbeiten der ersten Berechtigungs-Managementmeldung durch einen mit dem zweiten Sicherheitsclient gepaarten ersten Sicherheitsclient, der von dem Bedieneridentifizierer des ersten konditionellen Zugriffssystems identifiziert ist, um eine Entschlüsselung der verschlüsselten Dienstdaten zu ermöglichen.

13. Das Verfahren von Anspruch 12, das ferner die Schritte umfasst:
- Empfangen der verschlüsselten Dienstdaten über ein erstes Netzwerk;
- Empfangen der ersten Berechtigungs-Managementmeldung enthaltenden zweiten Meldung über ein zweites Netzwerk.

14. Das Verfahren nach Anspruch 13, das ferner den Schritt umfasst: Empfangen von weiteren Berechtigungsmeldungen über das erste Netzwerk.

15. Das Verfahren nach einem oder mehreren der vorangehenden Ansprüche 12 -14, das ferner den Schritt umfasst: eindeutiges Paaren des ersten Sicherheitsclients und des zweiten Sicherheitsclients.

16. Das Verfahren nach einem oder mehreren der vorhergehenden Ansprüche 12 -15, wobei der erste Sicherheitsclient und der zweite Sicherheitsclient über einen sicheren Kanal kommunizieren.

17. Das Verfahren nach Anspruch 15, das ferner die Schritt umfasst:
- Empfangen einer Paartrennungsmeldung über zumindest eines des ersten Netzwerks und des zweiten Netzwerks;
- Trennen der eindeutigen Paarung des ersten Sicherheitsclients und des zweiten Sicherheitsclients in Antwort auf die Paartrennungsmeldung

18. Das Verfahren nach Anspruch 15, das die Schritte umfasst:
- Empfangen einer Paarungsmeldung über das erste Netzwerk und das zweite Netzwerk;
- Paaren des ersten Sicherheitsclients und des zweiten Sicherheitsclients in Antwort auf die Paarungsmeldung.

19. Benutzerterminal umfassend:
- einen ersten Empfänger, der konfiguriert ist, um durch ein erstes konditionelles Zugriffssystem verschlüsselte Dienstdaten eines verschlüsselten Dienstes zu empfangen;
- ein Entschlüsselungsmodul, das konfiguriert ist, um die verschlüsseltem Dienstdaten zu entschlüsseln, um entschlüsselte Dienstdaten zu erhalten;
- einen ersten Sicherheitsclient, der mittels eines Bedieneridentifizierers des ersten konditionellen Zugriffssystems dem ersten konditionellen Zugriffssystem zugeordnet ist;
- einen zweiten Sicherheitsclient, der mittels eines Bedieneridentifizierers eines zweiten konditionellen Zugriffssystems dem zweiten konditionellen Zugriffssystem zugeordnet ist und mit dem ersten Sicherheitsclient gepaart ist;
- einen zweiten Empfänger, der konfiguriert ist, um eine zweite Meldung zu empfangen, die einem zweiten konditionellen Zugriffsprotokoll entspricht, das von dem zweiten konditionellen Zugriffssystem erzeugt wird, den Bedieneridentifizierer des zweiten konditionellen Zugriffssystems trägt und eine erste Berechtigungs-Managementmeldung enthält, die einem ersten konditionellen Zugriffsprotokoll entspricht, das sich von dem zweiten konditionellen Zugriffsprotokoll unterscheidet und von dem ersten konditionellen Zugriffssystem erzeugt wird, den Bedieneridentifizierer des ersten konditionellen Zugriffssystems sowie eine Berechtigung für einen Teilnehmer des Benutzerterminals tragend, um den verschlüsselten Dienst zu entschlüsseln;
- wobei der zweite Sicherheitsclient konfiguriert ist, um, in Antwort auf die Erkennung des Bedieneridentifizierers des zweiten konditionellen Zugriffssystems von der zweiten Meldung, die zweite Meldung erfolgreich zu bearbeiten, um die erste Berechtigungs-Managementmeldung zu erhalten;
- wobei der zweite Sicherheitsclient konfiguriert ist, um, in Antwort auf die Erkennung des Bedieneridentifizierers des ersten konditionellen Zugriffssystems von der ersten Berechtigungs-Managementmeldung, die erste Berechtigungs-Managementmeldung erfolgreich zu bearbeiten, um das Entschlüsselungsmodul in die Lage zu versetzen, die verschlüsselten Dienstdaten zu entschlüsseln.

20. Das Benutzerterminal nach Anspruch 19, das ferner konfiguriert ist, um das Verfahren von einem oder mehreren der Ansprüche 12 - 18 durchzuführen.

## Revendications

1. Procédé permettant à un terminal utilisateur d'un abonné de décrypter un service crypté dans un système comprenant au moins un premier système d'accès conditionnel, associé à un premier client de sécurité dans ledit terminal utilisateur par un premier identifiant d'opérateur de système d'accès conditionnel, et un deuxième système d'accès conditionnel, associé à un deuxième client de sécurité apparié avec ledit premier client de sécurité dans ledit terminal utilisateur par un deuxième identifiant d'opérateur de système d'accès conditionnel, ledit premier système d'accès conditionnel étant connecté audit deuxième système d'accès conditionnel et au moins ledit deuxième système d'accès conditionnel étant connecté audit terminal utilisateur, le procédé comprenant les étapes qui consistent à :
- générer au moins un premier message de gestion d'habilitation par ledit premier système d'accès conditionnel, ledit premier message de gestion d'habilitation étant conforme à un premier protocole d'accès conditionnel, portant ledit premier identifiant d'opérateur de système d'accès conditionnel et une habilitation audit abonné dudit terminal utilisateur pour décrypter ledit service crypté, ledit premier identifiant d'opérateur de système d'accès conditionnel du premier message de gestion d'habilitation permettant au premier client de sécurité de traiter avec succès le premier message de gestion d'habilitation dès lors que le premier identifiant d'opérateur de système d'accès conditionnel est reconnu ;
- transmettre ledit premier message de gestion d'habilitation audit deuxième système d'accès conditionnel ;
- générer au moins un deuxième message audit deuxième système d'accès conditionnel, ledit deuxième message étant conforme à un deuxième protocole d'accès conditionnel différent du premier protocole d'accès conditionnel, portant ledit deuxième identifiant d'opérateur de système d'accès conditionnel dudit deuxième système d'accès conditionnel, ledit deuxième identifiant d'opérateur de système d'accès conditionnel du deuxième message permettant au deuxième client de sécurité de traiter avec succès le deuxième message dès lors que le deuxième identifiant d'opérateur de système d'accès conditionnel est reconnu ;
- encapsuler ledit premier message de gestion d'habilitation par ledit deuxième message ;
- transmettre ledit deuxième message contenant le premier message de gestion d'habilitation dudit deuxième système d'accès conditionnel audit terminal utilisateur pour permettre de décrypter ledit service crypté.

2. Procédé selon la revendication 1, dans lequel un système de fourniture de service est connecté audit terminal utilisateur à travers un premier réseau, ledit premier système d'accès conditionnel étant configuré pour crypter des données de service provenant dudit système de fourniture de service et ledit deuxième système d'accès conditionnel est connecté audit terminal utilisateur à travers un deuxième réseau, le procédé comprenant en outre les étapes qui consistent à :
- transmettre lesdites données de service cryptées dudit service crypté audit terminal utilisateur à travers ledit premier réseau ;
- transmettre ledit deuxième message contenant le premier message de gestion d'habilitation audit terminal utilisateur à travers ledit deuxième réseau.

3. Procédé selon la revendication 2, comprenant l'étape qui consiste à transmettre en outre des messages de gestion d'habilitation audit terminal utilisateur à travers ledit premier réseau.

4. Procédé selon la revendication 2 ou 3, dans lequel ledit premier client de sécurité est configuré pour traiter ledit premier message de gestion d'habilitation et ledit deuxième client de sécurité est configuré pour traiter ledit deuxième message, ledit premier client de sécurité et ledit deuxième client de sécurité étant appariés, le procédé comprend en outre l'étape qui consiste à transmettre un message de rupture de paire de clients de l'au moins un premier et un deuxième système d'accès conditionnel à travers lesdits premier et deuxième réseaux, respectivement, pour empêcher au moins l'un des premier et deuxième clients de sécurité de traiter ledit premier message d'habilitation et ledit deuxième message respectivement.

5. Procédé selon l'une ou plusieurs des revendications 2-4, comprenant en outre les étapes qui consistent à :
- transmettre un premier message de paire dudit premier système d'accès conditionnel audit premier client de sécurité à travers ledit premier réseau ; et
- transmettre un deuxième message de paire dudit deuxième système d'accès conditionnel audit deuxième client de sécurité à travers ledit deuxième réseau.

6. Procédé selon l'une ou plusieurs des revendications précédentes, dans lequel ledit deuxième message est un message de gestion d'habilitation.

7. Procédé selon l'une ou plusieurs des revendications précédentes, dans lequel ledit premier système d'accès conditionnel comprend un premier système de gestion d'abonné et ledit deuxième système d'accès conditionnel comprend un deuxième système de gestion d'abonné, le procédé comprenant en outre l'étape qui consiste à recevoir des messages de changement d'habilitation dudit deuxième système de gestion d'abonné audit premier système de gestion d'abonné.

8. Système configuré pour permettre à un terminal utilisateur d'un abonné de décrypter un service crypté comprenant un premier système d'accès conditionnel, associé à un premier client de sécurité dans ledit terminal utilisateur par un premier identifiant d'opérateur de système d'accès conditionnel, et un deuxième système d'accès conditionnel, associé à un deuxième client de sécurité apparié avec ledit premier client de sécurité dans ledit terminal utilisateur par un deuxième identifiant d'opérateur de système d'accès conditionnel, ledit premier système d'accès conditionnel et ledit deuxième système d'accès conditionnel pouvant être connectés l'un à l'autre, ledit premier système d'accès conditionnel comprenant :
- un premier générateur configuré pour générer au moins un premier message de gestion d'habilitation, ledit premier message de gestion d'habilitation étant conforme au premier protocole d'accès conditionnel, portant ledit premier identifiant d'opérateur de système d'accès conditionnel et une habilitation audit abonné dudit terminal utilisateur pour décrypter ledit service crypté, ledit premier identifiant d'opérateur de système d'accès conditionnel du premier message de gestion d'habilitation permettant au premier client de sécurité de traiter avec succès le premier message d'habilitation dès lors que le premier identifiant d'opérateur de système d'accès conditionnel est reconnu ; et
- un premier émetteur pour transmettre ledit premier message de gestion d'habilitation audit deuxième système d'accès conditionnel ; ledit deuxième système d'accès conditionnel comprenant :
- un récepteur configuré pour recevoir ledit premier message de gestion d'habilitation à partir dudit premier émetteur ;
- un deuxième générateur configuré pour générer au moins un deuxième message étant conforme à un deuxième protocole d'accès conditionnel différent du premier protocole d'accès conditionnel, ledit deuxième message portant ledit deuxième identifiant d'opérateur de système d'accès conditionnel, ledit deuxième identifiant d'opérateur de système d'accès conditionnel du deuxième message permettant au deuxième client de sécurité de traiter avec succès le deuxième message dès lors que le deuxième identifiant d'opérateur de système d'accès conditionnel est reconnu ;
- un encapsulateur configuré pour encapsuler ledit premier message de gestion d'habilitation dans ledit deuxième message, et
- un deuxième émetteur pour transmettre ledit deuxième message contenant le premier message d'habilitation audit terminal utilisateur pour permettre le décryptage dudit service crypté.

9. Système selon la revendication 8, comprenant en outre un système de fourniture de service configuré pour fournir des données de service, où ledit premier système d'accès conditionnel est configuré pour crypter lesdites données de service pour fournir ledit service crypté à travers un premier réseau audit terminal utilisateur et où ledit deuxième émetteur est configuré pour transmettre ledit deuxième message contenant le premier message d'habilitation sur un deuxième réseau audit terminal utilisateur.

10. Système selon les revendications 8 ou 9, dans lequel ledit deuxième générateur est configuré pour générer ledit deuxième message comme un message de gestion d'habilitation.

11. Système selon l'une ou plusieurs des revendications 8-10, où au moins l'un du premier système d'accès conditionnel et deuxième système d'accès conditionnel est configuré pour exécuter l'étape des revendications 4 et 5.

12. Procédé permettant le décryptage d'un service crypté dans un terminal utilisateur d'un abonné, le procédé comprenant les étapes qui consistent à :
- recevoir des données de service, cryptées par un premier système d'accès conditionnel, dudit service crypté ;
- recevoir un deuxième message qui est conforme à un deuxième protocole d'accès conditionnel, généré par un deuxième système d'accès conditionnel, portant un deuxième identifiant d'opérateur de système d'accès conditionnel et ayant un premier message d'habilitation encapsulé qui est conforme à un premier protocole d'accès conditionnel différent du deuxième protocole d'accès conditionnel, ledit premier message de gestion d'habilitation étant généré par ledit système d'accès conditionnel, portant un premier identifiant d'opérateur de système d'accès conditionnel dudit premier système d'accès conditionnel et une habilitation audit abonné dudit terminal utilisateur pour décrypter ledit service crypté ;
- traiter avec succès, dès reconnaissance du deuxième identifiant d'opérateur de système d'accès conditionnel, ledit deuxième message par un deuxième client de sécurité, identifié par ledit deuxième identifiant d'opérateur de système d'accès conditionnel, pour obtenir ledit premier message d'habilitation ;
- traiter avec succès, dès reconnaissance du premier identifiant d'opérateur de système d'accès conditionnel, ledit premier message de gestion d'habilitation par un premier client de sécurité apparié avec le deuxième client de sécurité, identifié par ledit premier identifiant d'opérateur de système d'accès conditionnel, pour permettre le décryptage desdites données de service cryptées.

13. Procédé de la revendication 12, comprenant en outre les étapes qui consistent à :
- recevoir lesdites données de service cryptées sur un premier réseau ;
- recevoir ledit deuxième message contenant le premier message de gestion d'habilitation sur un deuxième réseau.

14. Procédé selon la revendication 13, comprenant en outre l'étape qui consiste à recevoir en outre des messages d'habilitation sur ledit premier réseau.

15. Procédé selon l'une ou plusieurs des revendications précédentes 12-14, comprenant en outre l'étape qui consiste à apparier uniquement ledit premier client de sécurité et ledit deuxième client de sécurité.

16. Procédé selon l'une ou plusieurs des revendications précédentes 12-15, dans lequel ledit premier client de sécurité et ledit deuxième client de sécurité communiquent sur un canal sécurisé.

17. Procédé selon la revendication 15, comprenant en outre les étapes qui consistent à :
- recevoir un message de rupture de paire sur au moins l'un desdits premier et deuxième réseaux ;
- rompre ledit appariement unique desdits premier et deuxième clients de sécurité en réponse audit message de rupture de paire.

18. Procédé selon la revendication 15, comprenant les étapes qui consistent à :
- recevoir un message d'appariement sur lesdits premier et deuxième réseaux ;
- apparier lesdits premier et deuxième clients de sécurité en réponse audit message d'appariement.

19. Terminal utilisateur, comprenant :
- un premier récepteur configuré pour recevoir des données de service, cryptées par un premier système d'accès conditionnel, d'un service crypté ;
- un module de décryptage configuré pour décrypter lesdites données de service cryptées pour obtenir des données de service décryptées ;
- un premier client de sécurité associé audit premier système d'accès conditionnel au moyen d'un premier identifiant d'opérateur de système d'accès conditionnel ;
- un deuxième client de sécurité associé à un deuxième système d'accès conditionnel au moyen d'un deuxième identifiant d'opérateur de système d'accès conditionnel et apparié avec le premier client de sécurité ;
- un deuxième récepteur configuré pour recevoir un deuxième message qui est conforme à un deuxième protocole d'accès conditionnel, généré par ledit deuxième système d'accès conditionnel, portant ledit deuxième identifiant d'opérateur de système d'accès conditionnel et contenant un premier message de gestion d'habilitation qui est conforme à un premier protocole d'accès réseau différent du deuxième protocole d'accès conditionnel, généré par ledit premier système d'accès conditionnel, portant ledit premier identifiant d'opérateur de système d'accès conditionnel et une habilitation pour un abonné dudit terminal utilisateur pour décrypter ledit service crypté ;
- ledit deuxième client de sécurité, en réponse à une reconnaissance dudit deuxième identifiant d'opérateur de système d'accès conditionnel dudit deuxième message, étant configuré pour traiter avec succès un deuxième message pour obtenir ledit premier message de gestion d'habilitation ;
- ledit premier client de sécurité, en réponse à une reconnaissance dudit premier identifiant d'opérateur de système d'accès conditionnel dudit premier message de gestion d'habilitation, étant configuré pour traiter avec succès ledit premier message de gestion d'habilitation pour permettre audit module de décryptage de décrypter lesdites données de service cryptées.

20. Terminal utilisateur selon la revendication 19, étant en outre configuré pour exécuter le procédé de l'une ou plusieurs des revendications 12-18.
